# DEMANDE DE BREVET EUROPEEN

(11) **EP 4 276 431 A1**
(43) Date de publication de la demande: **15.11.2023**
(21) Numéro de dépôt: 23172344.6
(22) Date de dépôt: 09.05.2023
(51) Int. Cl.: G01K 3/04, G01K 1/16, G01K 5/60, G01K 11/12

(54) **DISPOSITIF INDICATEUR THERMIQUE**

(30) Priorité: 10.05.2022 FR 2204414
(71) Demandeur: Airbus Operations, 31060 Toulouse (FR)
(72) Inventeur: ARMERO, Bernardo, 31060 TOULOUSE (FR)
(74) Mandataire: Airbus-OPS SAS

(57) **Abrégé**

L'invention concerne un dispositif (8, 8a, 8b, 8c) indicateur thermique configuré pour être fixé sur des parois (4a) constituant ensemble une enceinte (4), ledit dispositif (8, 8a, 8b, 8c) indicateur comprenant successivement une couche (10) partiellement isolante de la chaleur, une couche (12) conductrice de la chaleur, et une couche témoin (14) choisie pour réagir à l'augmentation de température et recouvrant au moins partiellement la couche (12) et conformée pour indiquer visuellement, via un changement d'état de la couche témoin (14), une augmentation de température de la couche (12).

## Description

L'invention concerne un dispositif indicateur thermique d'une enceinte contenant des éléments susceptibles de générer une hausse de température lors de leur utilisation.

Les batteries au lithium doivent maintenir un bon état de dissipation thermique pendant le stockage, le transport et l'utilisation. En effet, un emballement thermique peut se produire en raison de l'accumulation de chaleur générée par les batteries lors de leur utilisation. Lorsqu'une batterie au lithium est thermiquement hors de contrôle, une série de réactions secondaires telles que la décomposition thermique du film d'interface d'électrolyte solide, la réaction entre les matériaux positifs et négatifs et l'électrolyte, libère une grande quantité de chaleur. Le taux de génération de chaleur augmente avec la température de façon exponentielle. En conséquence, l'emballement thermique d'une seule batterie au lithium peut provoquer un emballement thermique des batteries environnantes, entraînant un effet domino, ce qui peut engendrer des dégradations importantes des batteries ainsi que de leur environnement. De plus, des gaz nocifs pour la santé sont libérés par les batteries lors de ce phénomène. Il est donc nécessaire de bloquer la propagation de ces effets lorsque l'emballement thermique se produit, afin de limiter les conséquences d'un tel phénomène. Les autorités demandent à ce que cet évènement soit gérer sans conséquences majeures pour le fonctionnement ou même le stockage des batteries. Cette règlementation a conduit à concevoir des enceintes étanches et solides afin de contenir/ou limiter les conséquences d'un emballement thermique.

Par exemple, le document WO2022024076 concerne une enceinte constituée d'une barrière d'emballement thermique présentant une couche d'isolation thermique. Cette couche comprend une matrice fibreuse de fibres inorganiques, des particules inorganiques thermiquement isolantes dispersées à l'intérieur de la matrice fibreuse et un liant dispersé à l'intérieur de la matrice fibreuse de façon à lier la matrice de fibres. Bien que cette enceinte soit conçue pour contenir un emballement thermique et ses conséquences, les parois de cette enceinte autorisent néanmoins, par convection, un rayonnement thermique de la température interne dégagée par les éléments que contient l'enceinte. La température rayonnée reste cependant très inférieure à la température interne et n'impacte pas l'environnement extérieur de l'enceinte.

D'autres dispositifs comportent de plus des dispositifs pour alerter les opérateurs d'un risque d'emballement thermique. C'est le cas du document CN112290147 qui décrit un dispositif actif comprenant une enceinte pour loger des batteries lithium-ion, un contrôleur, des capteurs de température, un échangeur de chaleur et une pompe, le contrôleur analysant les données délivrées par les capteurs et indiquant si le niveau de chaleur dans l'enceinte atteste d'un emballement thermique.

Le document EP3772428, quant à lui, concerne une enceinte active capable de générer un signal d'avertissement acoustique en cas d'emballement thermique. Cette enceinte comprend un dispositif de ventilation agencé dans l'enceinte comportant un tube ayant une entrée dans l'enceinte et une sortie à l'extérieur de l'enceinte. Un sifflet acoustique est disposé dans ledit tube.

Les dispositifs dits actifs entraînent une complexification des installations par l'utilisation d'éléments supplémentaires (capteurs, calculateurs, tube, sifflet ...) nécessitant pour certains une alimentation électrique. Dans le cas particulier d'une installation de ces dispositifs dans un avion, ces différents éléments rajoutent de la masse, ce qui est préjudiciable d'un point de vue performance. Il est, de plus, nécessaire de vérifier régulièrement si ces éléments sont en état de fonctionner.

Dans le cas d'un dispositif passif, comme celui décrit dans le document WO2022024076, bien que performant lorsqu'il s'agit de contenir un emballement thermique, il ne permet pas de remarquer si un emballement thermique s'est effectivement produit dans l'enceinte. Ce manque d'informations sur son état interne introduit un risque pour les opérateurs, lors d'opérations de contrôle par exemple, du fait des pressions, des températures élevées et des dégagements de gaz nocifs générés par un tel emballement thermique dans l'enceinte.

### RESUME

Un objet de la présente invention est de résoudre tout ou partie des inconvénients de l'art antérieur mentionnés ci-dessus

L'invention concerne un dispositif indicateur thermique configuré pour être fixé sur des parois constituant ensemble une enceinte contenant des éléments susceptibles de générer une hausse de température lors de leur utilisation. Le dispositif indicateur comprend successivement :
- une couche partiellement isolante de la chaleur,
- une couche conductrice de la chaleur, et
- une couche témoin choisie pour réagir à l'augmentation de température et recouvrant au moins partiellement la couche conductrice de la chaleur et conformée pour indiquer visuellement, via un changement d'état de la couche témoin, une augmentation de température de la couche conductrice de la chaleur.

Ce dispositif présente l'avantage d'informer les opérateurs de la santé de l'enceinte contenant des éléments susceptibles d'emballement thermique, comme des batteries par exemple, c'est-à-dire de les informer d'une élévation anormale de la température. Dans une telle situation, la couche témoin présente une configuration indiquant que la température interne de l'enceinte contenant des éléments susceptibles d'emballement thermique a dépassé un seuil représentatif d'une hausse de la température d'au moins une batterie. Ainsi, un opérateur souhaitant avoir accès aux batteries en ouvrant l'enceinte, est directement et visuellement informé de la survenance d'un tel évènement. Un tel dispositif passif est simple à réaliser et ne nécessite aucune source d'énergie supplémentaire.

Selon des modes particuliers de réalisation :
- La taille et l'épaisseur de la couche partiellement isolante et de la couche conductrice de la chaleur sont dimensionnées pour contrôler la conductivité thermique de ladite couche conductrice.
- La conductivité thermique de la couche conductrice de la chaleur est dimensionnée pour diffuser la chaleur à la couche témoin lorsque la température interne de la couche partiellement isolante est supérieure à un seuil prédéfini de température.
- La couche témoin est composée d'un matériau thermosensible.
- La couche témoin est composée d'un matériau thermo-rétractable.
- La couche témoin se présente sous la forme d'un ruban.
- Les extrémités du ruban sont maintenues par des supports fixés sur la couche conductrice de la chaleur.
- Les supports et la couche témoin sont flexibles.
- La couche partiellement isolante comporte un moyen de fixation conformé pour fixer le dispositif indicateur thermique sur l'enceinte contenant des éléments susceptibles de générer une hausse de température lors de leur utilisation.

L'invention sera mieux comprise à la lecture de la description qui va suivre, donnée uniquement à titre d'exemple, et se référant aux dessins annexés sur lesquels :
- Fig.1 représente une enceinte contenant des éléments susceptibles de générer une hausse de température lors de leur utilisation selon l'art antérieur.
- Fig. 2 représente un dispositif indicateur thermique, selon l'invention, fixé sur une enceinte contenant des éléments susceptibles de générer une hausse de température lors de leur utilisation.
- Fig. 3 représente une vue de profil agrandie du dispositif indicateur thermique selon un premier mode de réalisation de l'invention.
- Fig. 4 représente une vue de profil du dispositif indicateur thermique selon le premier mode de réalisation dans une configuration représentative d'un emballement thermique.
- Fig. 5 représente une vue de face du dispositif indicateur thermique selon un deuxième mode de réalisation de l'invention.
- Fig. 6 représente une vue de face du dispositif indicateur thermique selon le deuxième mode de réalisation dans une configuration représentative d'un emballement thermique.
- Fig. 7 représente une vue en coupe selon A-A du dispositif indicateur thermique selon le deuxième mode de réalisation.
- Fig. 8 représente une variante de réalisation du dispositif indicateur thermique.

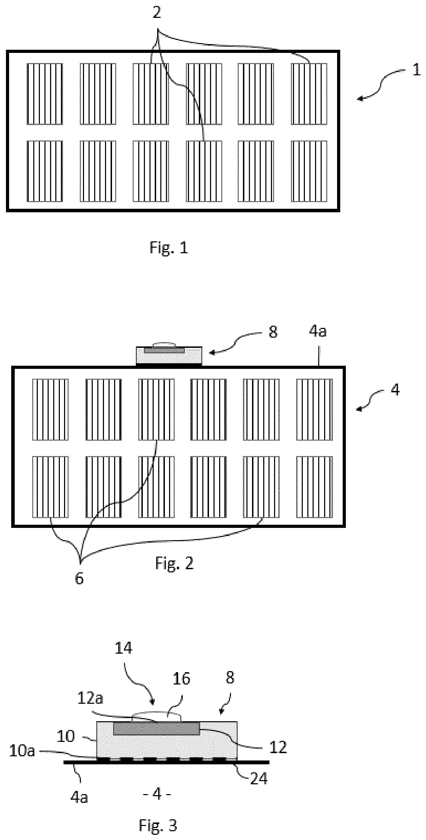

La figure 1 représente de manière schématique une enceinte 1 destinée à contenir des éléments susceptibles de générer une hausse de température lors de leur utilisation, comme des batteries 2, selon l'art antérieur. Lorsque les batteries 2 sont utilisées, elles produisent de la chaleur qui peut s'accumuler et entraîner un emballement thermique. Il est donc nécessaire de protéger l'environnement extérieur des conséquences d'un tel phénomène. Cette enceinte 1 a été conçue afin de contenir la chaleur dégagée par cet emballement et isoler son contenu de l'extérieur. Cependant, lorsqu'un tel évènement se produit, il n'existe aucun indice permettant de mettre en garde un opérateur souhaitant contrôler les batteries. Cet opérateur peut donc être amené à ouvrir l'enceinte 1 sans savoir que cette opération présente un risque. Il est à noter que, bien que cette enceinte 1 soit conçue pour contenir un emballement thermique, les parois de cette enceinte autorisent néanmoins, par convection, un rayonnement thermique de la température interne dégagée par les éléments que contient l'enceinte.

En référence à la figure 2, il est représenté une enceinte 4. Cette enceinte 4 est destinée à contenir au moins une batterie 6, par exemple une batterie Li-lon. Comme précédemment indiqué, ces batteries 6 produisent de la chaleur lors de leur utilisation et peuvent engendrer un emballement thermique. D'un point de vue architecture et fonction, l'enceinte 4 est similaire à l'enceinte 1 de l'art antérieur mais comporte néanmoins un élément supplémentaire appelé dispositif 8 indicateur thermique selon l'invention. La structure de ce dispositif 8 est représentée sur la figure 3 sur laquelle seule une partie de la paroi supérieure 4a de l'enceinte 4 a été dessinée. Ce dispositif 8 indicateur signale à un opérateur souhaitant ouvrir l'enceinte 4 qu'un emballement thermique s'est produit ou qu'au contraire, il ne s'est pas produit. L'opérateur sait donc instantanément s'il peut ouvrir l'enceinte 4 en toute sécurité.

Le dispositif 8 indicateur thermique comprend une couche 10 sur laquelle est intégrée une couche 12 conductrice de la chaleur. Cette couche 10 est placée sur une face 4a de l'enceinte 4. La couche 10 est partiellement isolante de la chaleur et est conçue pour capter une partie de la chaleur rayonnée par l'enceinte 4. La couche 12 est disposée sur la périphérie de la couche 10, à l'opposé du la paroi 4a de l'enceinte 4. Sur la paroi externe 12a de la couche 12 est agencée une couche témoin 14 d'augmentation de température. Cette couche témoin 14 recouvre au moins partiellement la couche 12 conductrice de la chaleur. Les propriétés de cette couche témoin 14 varient en fonction de la température de la couche 12 conductrice de chaleur.

Ainsi, la température de l'enceinte 4 est transmise à la couche 10 qui l'a transmet à la couche 12 conductrice de chaleur. La montée en température de la couche 12 impacte les propriétés de la couche témoin 14 qui est en contact avec ladite couche 12 : la modification des propriétés de la couche 14 est fonction du niveau de température transmis par la couche 12. En conséquence, l'aspect de la couche témoin 14 est représentatif des phénomènes qui se sont produits dans l'enceinte 4.

Dans un premier mode de réalisation, la couche témoin 14 d'augmentation de température est une couche 16 constituée d'un matériau thermosensible (appelée couche thermosensible 16 par la suite) qui change de couleur en fonction de la température à laquelle il est soumis. Un tel matériau est par exemple décrit dans le document EP1186437. Cette couche thermosensible 16 recouvre au moins en partie la couche 12 conductrice de la chaleur.

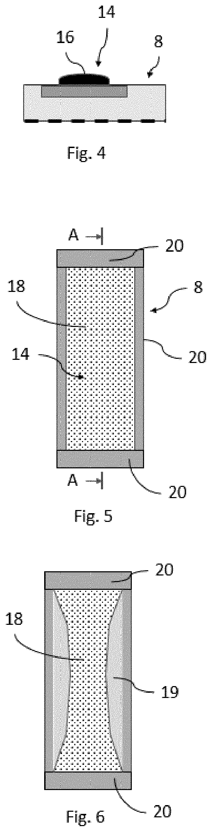

Les figures 3 et 4 illustrent le fonctionnement du dispositif 8 indicateur thermique. Sur ces figures, l'enceinte 4 n'a pas été représentée.

La figure 3 représente la configuration du dispositif 8 indicateur thermique lorsque les batteries 6 ont fonctionné normalement. La quantité de chaleur transmise par l'enceinte 4 au dispositif 8, par l'intermédiaire de la couche 10 et de la couche 12 conductrice de chaleur n'a pas déclenché de réaction au niveau de la couche 16 thermosensible : la couche témoin 16 conserve sa couleur initiale, les propriétés du matériau constitutif de la couche 16 n'ayant pas été modifiées. L'opérateur sait donc instantanément qu'il peut ouvrir en toute sécurité l'enceinte 4.

La figure 4 représente le cas d'un emballement thermique avéré. Les batteries 6 ont dégagé un fort niveau de chaleur engendrant un phénomène d'emballement thermique. La chaleur communiquée par l'enceinte 4, via la couche 10, à la couche 12 conductrice de chaleur a donc dépassé le seuil prédéfini représentatif d'un emballement thermique. La couche thermosensible 16 a réagi à ce fort niveau de température générant un changement de ses propriétés et a donc changé de couleur. La couche témoin 14 du dispositif 8 indicateur thermique présente donc une couleur dite d'alerte différente de sa couleur initiale. L'opérateur sait automatiquement, en regardant le dispositif 8 indicateur thermique qu'un tel phénomène s'est produit et qu'il ne doit pas ouvrir l'enceinte 4.

Selon un deuxième mode de réalisation de l'invention décrit sur les figures 5, 6 et 7, la couche témoin 14 est une couche 18 constituée d'un matériau thermo-rétractable (appelée couche thermo-rétractable 18 par la suite) qui se rétracte en fonction de la température à laquelle il est soumis. Un tel matériau peut, par exemple, se présenter sous la forme d'un film ou d'un ruban autocollant ou non. Sur ces figures, l'enceinte 4 n'a pas été représentée.

En référence à la figure 5, la couche thermo-rétractable 18 est appliquée sur une couche 19 (visible sur la figure 6) dont la couleur est différente de la couche thermo-rétractable 18. L'ensemble des deux couches 18 et 19 est déposé et fixé sur un support 20 apte à retenir les deux extrémités 18a, 18b de la couche thermo-rétractable 18. De tels supports 20 peuvent être, par exemple, des plaques métalliques collées ou fixées par tous moyens de fixations conventionnels. La couche thermo-rétractable 18 recouvre la totalité de la couche 19. L'ensemble des deux couches 18 et 19 ainsi que le support 20 forment la couche témoin 14 et sont fixés grâce au moyen de fixation 22 à la couche 12 conductrice. Ce moyen de fixation peut, par exemple, être un film autocollant.

Comme on peut le voir sur la figure 6, le dispositif 8 indicateur présente une configuration représentative d'un phénomène d'emballement thermique. En effet, les batteries 6 ont dégagé un fort niveau de chaleur engendrant un phénomène d'emballement thermique. La chaleur communiquée par l'enceinte 4, via la couche 10, à la couche 12 conductrice de chaleur a donc dépassé le seuil prédéfini représentatif d'un emballement thermique. La couche thermo-rétractable 18 a réagi à ce fort niveau de température et s'est partiellement rétractée, laissant apparaître la couche 19. Les deux couches 18 et 19 ayant des couleurs différentes, la rétraction de la couche 18 est facilement visible. La couche thermo-rétractable 18 étant maintenue à ses deux extrémités 18a, 18b par les supports 20, elle présente une géométrie de rétreint telle que représentée sur la figure 6 : la largeur de la couche 18 est amincie en son milieu mais n'est quasiment pas modifiée à ses extrémités 18a, 18b. Si l'opérateur, en regardant le dispositif 8, se rend compte que la géométrie de la couche témoin 14 a changé, il sait de fait qu'un emballement thermique s'est produit : il n'ouvrira donc pas l'enceinte 4.

Il faut noter que la température qui provoquent le changement de propriétés de la couche témoin 14 (couche thermosensible 16 ou couche thermo-rétractable 18) est fixe : ces deux matériaux sont conçus pour réagir à cette seule température (température d'activation) qui est définie par le constructeur de ces matériaux. S'il est nécessaire d'adapter cette température à un équipement spécifique, il faudra alors modifier la structure interne de la couche témoin 14. Ce processus n'est pas flexible et nécessite une fabrication et/ou modification par le constructeur.

Il est donc intéressant de configurer la couche 10 et la couche 12 conductrice pour que la température d'activation de la couche thermosensible 16 (premier mode de réalisation) ou du rétreint de la couche thermo-rétractable 18 (deuxième mode de réalisation) soit pilotée par la taille et l'épaisseur de la couche 10 partiellement isolante et de la couche 12 conductrice de la chaleur. En effet, la géométrie de la couche 10 et de la couche 12 permettent de définir la conductivité thermique de la couche 12 conductrice de la chaleur : elles définissent donc la température qui est transmise à la couche témoin 14.

Comme déjà indiqué, l'enceinte 4, bien qu'isolante, émet un rayonnement thermique externe lorsque sa température interne augmente trop fortement. La température de ce rayonnement est largement inférieure à la température interne de l'enceinte et ne peut donc pas causer de dommages mais elle est significative d'une augmentation anormale de la température. Il est donc intéressant que la couche 10 soit partiellement isolante de manière à remplir la fonction de barrière thermique tout en étant capable d'absorber une partie de la chaleur rayonnée par l'enceinte 4. Une couche 10 fabriquée en Nylon^{®} apportera cette isolation thermique tout en permettant d'emmagasiner une partie de la chaleur rayonnée. Cette chaleur emmagasinée sera transmise à la couche 12 conductrice et provoquera, si la température d'activation de la couche témoin 14 est atteinte, le changement de propriétés de ladite couche 14. La couche 12 est fabriquée dans un matériau conducteur de la chaleur, comme le cuivre ou l'aluminium par exemple.

C'est donc l'ensemble couche 10 partiellement isolante/couche 12 conductrice de la chaleur qui pilote la température transmise à la couche témoin 14, les dimensions géométriques de la couche 10 et de la couche 12 étant conçues pour s'adapter à la température d'activation de la couche témoin 14.

Cette faculté présente l'avantage d'adapter facilement le dispositif 8 indicateur thermique à différents équipements en fonction de leurs caractéristiques intrinsèques. Par exemple, une enceinte 4 contenant quatre batteries 6 ne dégage pas autant de chaleur qu'une enceinte 4 contenant douze batteries. Il est donc nécessaire d'adapter les caractéristiques géométriques de la couche 10 et de la couche 12 conductrice à la structure sur laquelle le dispositif 8 indicateur thermique est appliqué afin que les propriétés de la couche témoin 14 ne soient pas intempestivement modifiées, indiquant à tort soit la survenue d'un emballement thermique qui ne s'est pas produit, soit la non-survenue d'un emballement thermique alors que c'est le cas.

En conclusion, lorsque la température d'emballement est connue, il est aisé de définir les caractéristiques géométriques de la couche 10 et de la couche 12 afin que la couche témoin 14 soit activée par cette température.

Ainsi, la taille et l'épaisseur de la couche 10 et de la couche 12 conductrice de la chaleur sont dimensionnées pour contrôler la conductivité thermique de ladite couche 12. Cette conductivité thermique de ladite couche 12 est donc dimensionnée pour que la couche 12 diffuse la chaleur emmagasinée dans la couche 10 à la couche témoin 14 lorsque la température interne de la couche 10 est supérieure à un seuil prédéfini de température. Ce seuil sera calculé pour être représentatif d'une température d'emballement.

Le dispositif 8 indicateur thermique est fixé sur la paroi 4a de l'enceinte 4 contenant les batteries 6 grâce à un moyen 24 de fixation adapté. Ce moyen de fixation 24 est fixé sur la paroi 10a de la couche 10, ladite paroi 10a étant diamétralement opposée à la couche 12 conductrice de la chaleur (figure 3). Ce moyen de fixation 24 peut, par exemple, être une couche adhésive ou une couche magnétique permettant de solidariser le dispositif 8 à l'enceinte 4. Ce moyen 24 peut être amovible ce qui présente l'avantage de pouvoir facilement le remplacer.

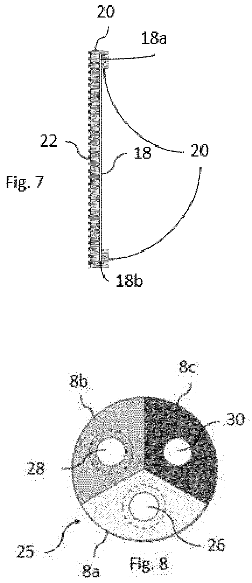

Selon une variante de réalisation représentée sur la figure 8, un disque 25 est fixé sur une enceinte 4 non représentée. Ce disque comporte trois dispositifs (8a, 8b, 8c) indicateur thermique, chacun d'eux étant différent et étant conçu pour réagir à une température prédéfinie rayonnée par l'enceinte 4. Ces trois dispositifs comportent chacun une couche témoin (26, 28, 30) d'augmentation de température. Ces couches témoin peuvent être une couche thermosensible ou thermo-rétractable comme décrit précédemment. Dans la variante de réalisation de la figure 8, il a été choisi de représenter une couche témoin (26, 28, 30) thermosensible. Conformément à la description qui a été faite du dispositif 8 indicateur thermique, chaque dispositif (8a, 8b, 8c) comporte une couche 10 partiellement isolante ainsi qu'une couche 12 conductrice de la chaleur. Cependant, afin d'affiner l'information délivrée à l'opérateur, chacune des couches 10 et des couches 12 présente des géométries différentes. Dans cette variante de réalisation, le dispositif 8a est dimensionné pour indiquer à l'opérateur que les batteries contenues dans l'enceinte 4 dégagent un niveau de chaleur conforme à un fonctionnement normal. Par exemple, la chaleur rayonnée par l'enceinte 4 ne dépasse pas la température représentative d'un fonctionnement normal (90°C par exemple) : dans ce cas, les caractéristiques géométriques du dispositif 8a sont dimensionnées pour que la température transmise aux couches témoins (26, 28, 30) n'affecte que la couche 26 du dispositif 8a : en adaptant la géométrie de la couche 10 et de la couche 12 conductrice de chaleur du dispositif 8a, la température ressentie par la couche témoin 26 est ciblée : la température transmise à la couche 26 correspond à la température de la couche 26, ses propriétés sont modifiées et celle-ci change de couleur (ou se rétracte) pour indiquer que le fonctionnement des batteries 6 est normal.

Cependant, les caractéristiques géométriques des deux autres dispositifs (8c, 8b) sont dimensionnées pour isoler les couches témoin (28, 30) afin qu'elles ne soient pas impactées par cette température. La géométrie de la couche 10 et de la couche 12 conductrice des dispositifs (8b, 8c) est conçue pour agir en tant que barrière thermique envers les couches témoin (28, 30) tant que la température emmagasinée par ces dispositifs n'atteint pas la température d'activation désirée : ces couches ne réagiront donc pas tant que la température qui leur est transmise reste en-dessous de leur température d'activation.

Dans un second temps, lorsque la température rayonnée par l'enceinte 4 augmente (jusqu'à 140°C par exemple), le deuxième dispositif 8b s'active. En effet, la géométrie de la couche 10 et de la couche 12 conductrice est conçue pour transmettre à la couche témoin 28 une température supérieure à la température représentative d'un fonctionnement normal (90°C dans cet exemple) et inférieure à la température représentative d'un emballement thermique (140°C par exemple). Cette plage de température rayonnée par l'enceinte 4 et transmise au dispositif 8b est représentative d'un comportement anormal des batteries, d'une sur-température en l'occurrence. La température d'activation de la couche témoin 28 ayant été atteinte, celle-ci change donc de couleur (ou se rétracte), indiquant à l'opérateur qu'une opération de maintenance doit être réalisée.

Comme précédemment, les caractéristiques géométriques du dernier dispositif 8c sont dimensionnées pour ne pas être impactées par cette sur-température. La géométrie de la couche 10 et de la couche 12 conductrice du dispositif 8c est conçue pour agir en tant que barrière thermique envers la couche témoin 30 : cette couche ne réagira donc pas tant que la température reste en-dessous de la température représentative d'un emballement thermique (température supérieure à 140°C dans cet exemple).

Enfin, en cas d'emballement thermique, lorsque la température rayonnée par l'enceinte 4 dépasse la température représentative d'un emballement thermique (supérieure à 140°C dans cet exemple), le troisième dispositif 8c s'active. La géométrie de la couche 10 et de la couche 12 conductrice du dispositif 8c est conçue pour transmettre à la couche témoin 30 une température supérieure à la température représentative d'un emballement thermique. Cette température rayonnée par l'enceinte 4 et transmise au dispositif 8c est représentative d'un comportement anormal d'emballement thermique des batteries 6. La température d'activation de la couche témoin 30 ayant été atteinte, celle-ci change donc de couleur (ou se rétracte), indiquant à l'opérateur qu'un emballement thermique s'est produit et qu'il devra prendre des précautions avant d'ouvrir l'enceinte 4.

Cette variante de réalisation indique donc finement à un opérateur l'état interne d'une enceinte 4 contenant des éléments susceptibles de générer une hausse de température lors de leur utilisation.

Les avantages d'un tel dispositif 8 sont nombreux :
- Il s'agit d'un dispositif passif qui ne nécessite pas d'énergie ni d'éléments électroniques,
- Ce dispositif s'adapte à toutes configurations d'enceinte 4 contenant des batteries 6 ou des systèmes d'évacuation annexes,
- Il peut être facilement remplaçable,
- L'opérateur est automatiquement alerté d'un risque à l'ouverture de l'enceinte 4,
- Il est simple à fabriquer et nécessite des éléments peu onéreux.

L'exemple d'application choisi pour illustrer l'invention concerne une enceinte 4 contenant au moins une batterie 6. Cependant, un tel dispositif (8, 8a, 8b, 8c) indicateur thermique peut être utilisé sur différents éléments, comme par exemple un tube transportant un fluide pouvant être porté, lors de circonstances particulières et anormales, à de très fortes températures.

## Revendications

1. Dispositif (8, 8a, 8b, 8c) indicateur thermique configuré pour être fixé sur des parois (4a) constituant ensemble une enceinte (4) contenant des éléments (6) susceptibles de générer une hausse de température lors de leur utilisation, ledit dispositif (8, 8a, 8b, 8c) indicateur étant caractérisé en qu'il comprend successivement :
- une couche (10) partiellement isolante de la chaleur,
- une couche (12) conductrice de la chaleur, et
- une couche témoin (14) choisie pour réagir à l'augmentation de température et recouvrant au moins partiellement la couche (12) conductrice de la chaleur et conformée pour indiquer visuellement, via un changement d'état de la couche témoin (14), une augmentation de température de la couche (12) conductrice de la chaleur.

2. Dispositif (8, 8a, 8b, 8c) indicateur thermique selon la revendication 1, **caractérisée en ce que** la taille et l'épaisseur de la couche partiellement isolante (10) et de la couche (12) conductrice de la chaleur sont dimensionnées pour contrôler la conductivité thermique de ladite couche (12) conductrice.

3. Dispositif (8, 8a, 8b, 8c) indicateur thermique selon les revendications 1 ou 2, **caractérisée en ce que** la conductivité thermique de la couche (12) conductrice est dimensionnée pour diffuser la chaleur à la couche témoin (14) lorsque la température interne de la couche (10) est supérieure à un seuil prédéfini de température.

4. Dispositif (8, 8a, 8b, 8c) indicateur thermique selon l'une quelconque des revendications précédentes, **caractérisée en ce que** la couche témoin (14) est composée d'un matériau thermosensible.

5. Dispositif (8, 8a, 8b, 8c) indicateur thermique selon les revendications 1, 2 ou 3, **caractérisée en ce que** la couche témoin (14) est composée d'un matériau thermo-rétractable.

6. Dispositif (8, 8a, 8b, 8c) indicateur thermique selon la revendication 5, **caractérisée en ce que** la couche témoin (14) se présente sous la forme d'un ruban.

7. Dispositif (8, 8a, 8b, 8c) indicateur thermique selon la revendication 6, **caractérisée en ce que** les extrémités du ruban sont maintenues par des supports (20) fixés sur la couche (12) conductrice de la chaleur.

8. Dispositif (8, 8a, 8b, 8c) indicateur thermique selon la revendication 7, **caractérisée en ce que** les supports (20) et la couche témoin (14) sont flexibles.

9. Dispositif (8, 8a, 8b, 8c) indicateur thermique selon l'une quelconque des revendications précédentes, **caractérisée** en que la couche (10) partiellement isolante de la chaleur comporte un moyen de fixation (24) conformé pour fixer le dispositif (8, 8a, 8b, 8c) indicateur thermique sur l'enceinte (4) contenant des éléments (6) susceptibles de générer une hausse de température lors de leur utilisation.
